# EUROPÄISCHE PATENTSCHRIFT

(11) **EP 1 505 274 B1**
(45) Veröffentlichungstag und Bekanntmachung des Hinweises auf die Patenterteilung: **20.06.2012**
(21) Anmeldenummer: 04016516.9
(22) Anmeldetag: 14.07.2004
(51) Int. Cl.: F02B 29/04, F02B 37/013

(54) **Brennkraftmaschine mit 2-stufigem Abgasturbolader und Ladeluftkühlung zwischen Nieder- und Hochdruckverdichter**
Internal combustion engine with two-stage turbocharging and charge air cooling between low and high pressure compressors
Moteur avec un système de turbocompresseur à deux étages et le refroidissement d'air de suralimentation entre les compresseurs à basse et à haute pression

(30) Priorität: 05.08.2003 AT 12382003
(43) Veröffentlichungstag der Anmeldung: 09.02.2005
(73) Patentinhaber: MAN Truck & Bus Österreich AG, 4400 Steyr (AT)
(72) Erfinder: Raab, Gottfried, Dipl.-Ing., 4320 Perg (AT); Kislinger, Peter, Dipl.-Ing., 4040 Linz (AT); Povolny, Heinz, 4460 Losenstein (AT)

(56) Entgegenhaltungen:
- DE-A- 1 626 007
- DE-A- 19 961 610
- US-A- 4 688 383
- PATENT ABSTRACTS OF JAPAN Bd. 0092, Nr. 49 (M-419), 5. Oktober 1985 (1985-10-05) & JP 60 101223 A (YANMAR DIESEL KK), 5. Juni 1985 (1985-06-05)

## Beschreibung

Die Erfindung betrifft eine Brennkraftmaschine mit 2-stufigem Abgasturbolader mit einer Niederdruckstufe und einer Hochdruckstufe und mit einem Ladeluftkühler in der Verbindungsleitung zwischen dem Verdichter der Niederdruckstufe und dem Verdichter der Hochdruckstufe.

Eine Brennkraftmaschine mit solchen Merkmalen ist z. B. aus der DE 19961610 A1 bekannt. Dabei ist zwar ein Ladeluftkühler in der Verbindungsleitung zwischen dem Verdichter der Niederdruckstufe und jenem der Hochdruckstufe vorgesehen, es bleibt jedoch offen, wie dieser Ladeluftkühler ausgebildet ist. Des Weiteren ist aus der JP 60101223A ein Ladeluftkühler bekannt, der in die Verbindungsleitung zwischen Niederdruckverdichter und Hochdruckverdichter eingebaut ist. Dieser Ladeluftkühler ist durch einen großdimensionierten Kasten mit eingebauten Kühlrohren realisiert. Dieser Kasten ist zwischen zwei Abschnitte der Verbindungsleitung eingebaut, wobei einer der Verbindungsleitungsabschnitte zu diesen Kasten hinführt und ein Verbindungsleitungsabschnitt von diesem Kasten abgeht. Dieser kastenförmige Ladeluftkühler erstreckt sich fast über die gesamte Länge des Motors und beansprucht neben diesen einen vergleichsweise großen Raum, der regelmäßig in Fahrzeugen wie Lastkraftwagen, Omnibussen und dergleichen nicht vorhanden ist.

Es ist daher Aufgabe der Erfindung, für eine Brennkraftmaschine der gattungsgemäßen Art einen Ladeluftkühler zu schaffen, der räumlich beengten Verhältnissen an der Brennkraftmaschine zwischen dem Nieder- und Hochdruckverdichter des Abgasturboladers Rechnung trägt.

Diese Aufgabe ist bei einer Brennkraftmaschine der gattungsgemäßen Art erfindungsgemäß durch einen Ladeluftkühler mit im Kennzeichen des Anspruch 1 angegebenen Merkmalen gelöst.

Vorteilhafte Ausgestaltungen der erfindungsgemäßen Lösung sind in den Unteransprüchen gekennzeichnet.

Der erfindungsgemäße Ladeluftkühler zeichnet sich durch extrem kleine, aber trotzdem wirksame Bauweise aus. Dadurch, dass der Kühleinsatz nach Art einer Kartusche in einen speziell gestalteten Abschnitt der Verbindungsleitung zwischen ATL-Niederdruckverdichter und ATL-Hochdruckverdichter einbaubar ist und dieser Abschnitt der Verbindungsleitung mit seiner Wand die Außenwand des Ladeluftkühlers bildet, ist einerseits eine einfache Herstellung dieser Bauteile und andererseits auch einfache Montage derselben zwischen den beiden ATL-Stufen möglich. Eine hinreichend große Kühlwirkung wird deshalb erzielt, weil die Kühlrohre außen mit einer Vielzahl von Kühlrippen versehen sind, die für entsprechenden Wärmetausch sorgen.

Nachstehend ist der erfindungsgemäße Ladeluftkühler anhand eines in der Zeichnung dargestellten Ausführungsbeispiels noch näher erläutert. In der Zeichnung zeigen:
- Fig. 1: eine Prinzipdarstellung einer Brennkraftmaschine mit 2-stufiger Aufladung und Ladeluftkühlung zwischen Niederdruck- und Hochdruckstufe,
- Fig. 2: ein Ausführungsbeispiel für einen erfindungsgemäßen Kühleinsatz im Schnitt,
- Fig. 3: einen zum Ausführungsbeispiel gemäß Fig. 2 gehörenden Deckel,
- Fig. 4: ein Ausführungsbeispiel eines Verbindungsleitungsabschnitts zwischen den Verdichtern der beiden ATL-Stufen als Teil des erfindungsgemäßen Ladeluftkühlers,
- Fig. 5: ein Ausführungsbeispiel des erfindungsgemäßen Ladeluftkühlers unter Verwendung des Kühleinsatzes gemäß Fig. 2, des Deckels gemäß Fig. 3 und des Verbindungsleitungsabschnitts gemäß Fig. 4,
- Fig. 6: einen Querschnitt durch die Darstellung von Fig. 5 entlang der dortigen Schnittlinie VI-VI.

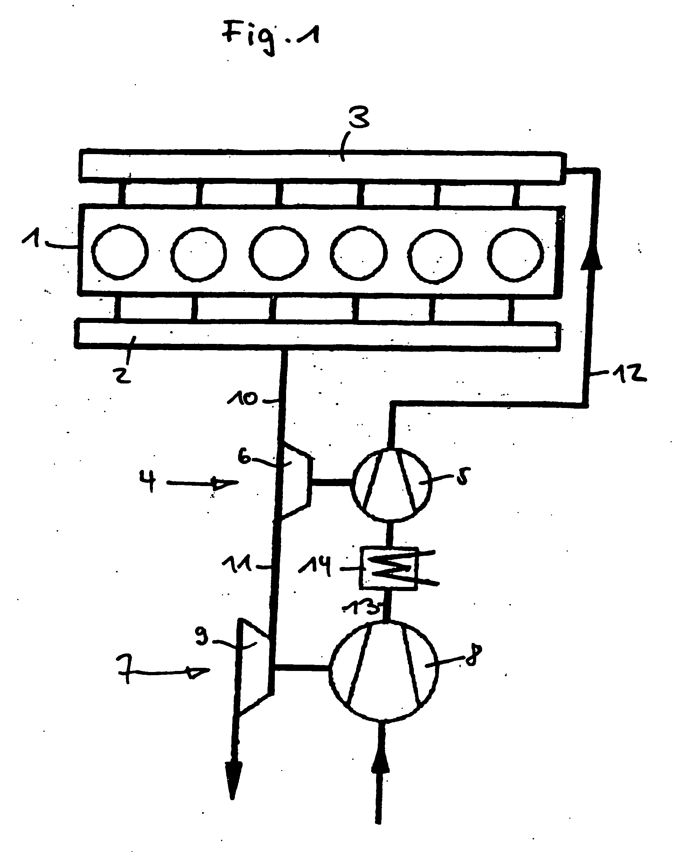

In Fig. 1 ist eine aufgeladene Brennkraftmaschine 1 gezeigt, deren mit den Auslasskanälen der Zylinder in Verbindung stehende Abgassammelleitung mit 2 und deren mit den Einlasskanälen der Zylinder in Verbindung stehende Ladeluftsammelleitung mit 3 bezeichnet ist. Der Brennkraftmaschine 1 ist ein 2-stufiger Abgasturbolader zugeordnet, dessen Hochdruckstufe 4 eine einen Verdichter 5 antreibende Turbine 6 und dessen Niederdruckstufe 7 eine einen Verdichter 8 antreibende Turbine 9 aufweist. Die Turbine 6 der Hochdruckstufe 4 steht über einen Abgaskanal 10 mit der Abgassammelleitung 2 und über einen Verbindungskanal 11 mit der Turbine 9 der Niederdruckstufe 7 in Verbindung. Der Verdichter 5 der Hochdruckstufe 4 steht über eine Ladeluftleitung 12 mit der Ladeluftsammelleitung 3 und über eine Verbindungsleitung 13 mit dem Verdichter 8 der Niederdruckstufe 7 in Verbindung. In der Verbindungsleitung 13 ist ein Ladeluftkühler 14 gegeben. Dieser Ladeluftkühler 14 ist entsprechend der Erfindung und wie nachfolgend des weiteren beschrieben ausgebildet.

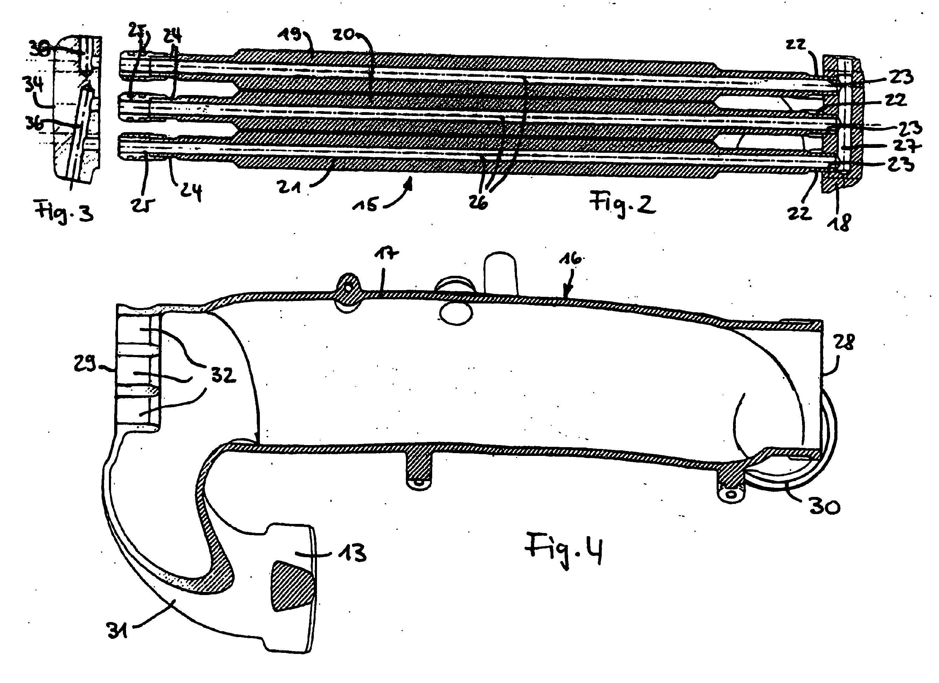

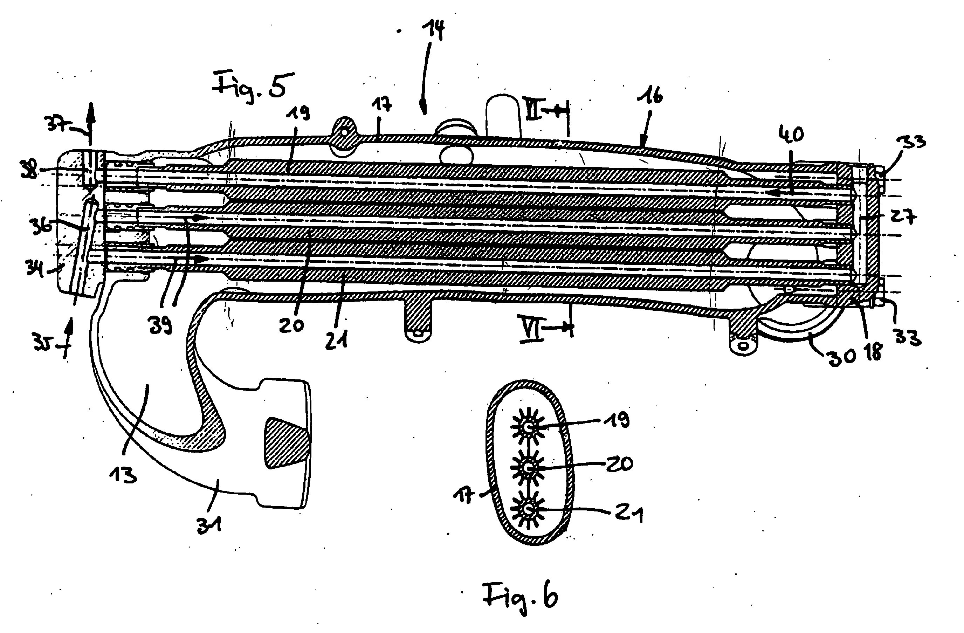

Erfindungsgemäß ist der Ladeluftkühler 14 durch einen von einem Kühlmedium durchströmbaren Kühleinsatz 15 - siehe Fig. 2 - im ladeluftführenden Verbindungskanal 13 und einen speziell gestalteten Abschnitt 16 des Verbindungskanals 13 - siehe Fig. 3, 4 - gebildet, wobei der Verbindungskanal 13 in diesem Abschnitt 16 mit seiner Wand 17 die Außenwand des Ladeluftkühlers 14 bildet und durch entsprechende formmäßige Gestaltung ein für eine akzeptable Kühlung der den darin eingebauten Kühleinsatz 15 - siehe Fig. 5 - umströmenden Ladeluft durch das den Kühleinsatz 15 durchströmende Kühlmedium ausreichendes Luftdurchsatzvolumen begrenzt.

Wie gut aus Fig. 2 ersichtlich, ist der Kühleinsatz 15 nach Art einer vormontierten Kartusche ausgebildet. Dieser Kühleinsatz 15 besteht aus einer Grundplatte 18 und mehreren, z. B. drei, außen mit einer Vielzahl von Kühlrippen - siehe Fig. 6 - versehenen Kühlrohren 19, 20, 21. Dabei weist jedes Kühlrohr 19, 20, 21 an seinem einen Ende einen kreiszylindrischen Bund 22 auf, mit dem es senkrecht stehend zur Grundplatte 18 in eine Sacklochbohrung 23 derselben eingebaut, z. B. eingepresst, eingeschweißt oder eingelötet ist. An seinem anderen Ende trägt jedes Kühlrohr 19, 20, 21 auf einem kreiszylindrischen Bund 24 eine Dichthülse 25. Innerhalb des Kühleinsatzes 15 kommuniziert jedes Kühlrohr 19, 20, 21 mit seiner Innenbohrung 26 mit einem in der Grundplatte 18 ausgebildeten Verteilerkanal 27.

Der Verbindungskanal 13 besteht in jenem, den Teil des Ladeluftkühlers 14 bildenden Abschnitt 16 aus einem weitgehend geraden Kühlrohrbereich 16 und zwei, an jeweils einem Endbereich vor dem axialen Ende 28, 29 seitlich abgehenden Krümmern 30, 31. Dabei ist der nach Art einer Kartusche ausgebildete Kühleinsatz 15 bei seiner Endmontage durch das eine offene Ende 28 des geraden Abschnitts 16 der Verbindungsleitung 13 in dessen Innenraum einschiebbar, wobei er mit den Dichthülsen 25 an den Kühlrohren 19, 20, 21 in am gegenüberliegenden axialen Ende 29 des Abschnitts 16 ausgebildete Haltebohrungen 32 dichtend eintaucht und zuletzt mit seiner Grundplatte 18 am einen axialen Ende 28 leckagefrei mittels mehrerer Schrauben 33 befestigt wird. Zuletzt wird der gerade Abschnitt 16 des Verbindungskanals 13 an seinem den Dichthülsen 25 benachbarten Ende 29 durch einen dort befestigbaren Deckel 34 verschlossen. Dieser Deckel 34 weist intern einen von außen her - siehe Pfeil 35 - mit Kühlmedium versorgbaren Verteilerkanal 36 auf, mit dem ein Teil der Kühlrohre, hier die Kühlrohre 20, 21 kommuniziert. Außerdem weist der Deckel 34 intern einen mit einer externen Kühlmedium-Rücklaufleitung - angedeutet durch Pfeil 37 - verbundenen Rücklaufkanal 38 auf, mit dem das oder die übrigen Kühlrohr(e), hier das Kühlrohr 19, kommuniziert.

Im dargestellten Beispiel weist der erfindungsgemäße Kühleinsatz 15 drei parallel in einer Ebene mit geringen Abstand nebeneinander angeordnete, gleich lange und gleich ausgebildete Kühlrohre 19, 20, 21 auf - siehe Fig. 6 -, wovon zwei (20, 21) parallel in der einen Richtung - siehe Pfeil 39 in Fig. 5 - mit Kühlmedium durchströmt sind und das dritte Kühlrohr 19 in der anderen Richtung - siehe Pfeil 40 - von Kühlmedium durchströmt wird und quasi eine kühleinsatzinterne Kühlmedium-Rückleitung bildet.

Der Verbindungskanal 13 umgibt in seinem geraden Kanalabschnitt 16 mit seiner Wand 17 den eingebauten Kühleinsatz 15 mit einem gewissen, nicht zu großen Abstand, der kleiner als der Außendurchmesser der Kühlrohre 19, 20, 21 ist.

In diesem erfindungsgemäßen Ladeluftkühler 14 wird trotz seiner relativ kleinen Baugröße aufgrund der intensiven Durchströmung der Kühlrohre 19, 20, 21 mit Kühlmedium und des innigen Kontakts der den Kühleinsatz 15 im Verbindungskanal-Abschnitt 16 durchströmenden Ladeluft mit den Kühlrippen der Kühlrohre 19, 20, 21 eine hinreichende Kühlwirkung erzielt.

## Patentansprüche

1. Brennkraftmaschine mit 2-stufigem Abgasturbolader (ATL) mit einer Niedetdludtstufe (7) und einer Hochdruckstufe (4) und mit einem Ladeluftkühler (14) in der Verbindungsleitung (13) zwischen dem Verdichter (8) der Niederdruckstufe (7) und dem Verdichter (5) der Hochdruckstufe (4), wobei
- der Ladeluftkühler (14) durch einen von einem Kühlmedium durchströmbaren Kühleinsatz (15) gebildet ist, der in einen speziell gestalteten Abschnitt (16) der von Ladeluft durchströmten Verbindungsteitung (13) zwischen den Verdicktern (8, 5) der Nieder- und Hochdruckstufe (7,4) eingebaut ist,
- der besagte spezeiell gestaitete Abschnitt (16) der Verbindungsleitung (13) mit seiner Wand (17) die Außenwand des Ladeluftkühlers (14) bildet und ein für eine hinreichende Kühlung der den eingebauten Kühleinsatz umströmenden Ladeluft ausreichendes Luftdurchsatzvolumen begrenzt,
- der besagte speziell gestaltete Abschnitt (16) der Verbindungsteitung (13) außerdem im Bereich des Ladeluftkühlers (14) weitgehend gerade ausgebitdet ist ferner an wenigstens einem Ende offen ist und außerdem zwei, an jeweils einem Endbereich vor jedem axialen Ende seitlich abgehende Krümmer (30.31) für Ladeluftzu-und -ableitung aufweist, und
- der besagte Kühteinsatz (15) nach Art einer Kartusche ausgebildet ist und aus einer Grundplatte sowie mehreren, außen mit einer Vielzahl von Kühirippen versehenen Kühlrohren (19, 20, 21) besteht, die in Bohrungen (23) der Grundplatte (18) eingepasst sind und mit einem in der Grundplatte ausgebifdeten Kühlmittel-Verteilerkanal (27) kommunizieren, **dadurch gekennzeichnet dass**, der Verbindungsleitung (13) im Abschnitt (16) um den Kühleinsatz (15) mit seiner Wand (17) den Kühleinsatz (15) mit einem Abstand der kleiner als der Durchmesser der Kühlrohre (19, 20, 21) ist, umgibt, und die Kühirohren im Bereich der Kühlrippen parallel zu der Ladeluftströmungsrichtung angeordnet sind.

2. Brennkraftmaschine nach Anspruch 1, **dadurch gekennzeichnet, dass** jedes Kühlrohr (19, 20, 21) innerhalb des nach Art einer Kartusche ausgebildeten Kühleinsatzes (15) an seinem einen Ende einen kreiszylindrischen Bund (22) aufweist, mit dem es senkrecht stehend zur Grundplatte (18) in eine Bohrung derselben eingebaut - eingepresst oder eingeschweißt oder eingelötet - ist, und dass jedes Kühlrohr (19, 20, 21) an seinem gegenüberliegenden Ende auf einem kreiszylindrischen Bund (24) eine Dichthülse (25) trägt.

3. Brennkraftmaschine nach den Ansprüchen 1 und 2, **dadurch gekennzeichnet, dass** der nach Art einer Kartusche ausgebildete Kühleinsatz (15) komplett vormontierbar ist und bei seiner Endmontage durch das eine offene Ende (28) in den Innenraum der hierfür vorbereiteten Verbindungsleitung (13, 16) einschiebbar ist und dabei mit den Dichthülsen (25) an den Kühlrohren (19, 20, 21) in am gegenüberliegenden axialen Ende (29) des geraden Abschnitts (16) an der Verbindungsleitung (13, 16) ausgebildete Haltebohrungen (32) eintaucht und mit seiner Grundplatte (18) am einen axialen Ende leckagefrei angeflanscht befestigbar ist, wobei der gerade Abschnitt (16) der Verbindungsleitung (13) an seinem den Dichthülsen (25) benachbarten Ende (29) durch einen dort befestigten Deckel (34) verschlossen ist, der intern einen von außen her mit Kühlmedium versorgten Verteilerkanal (36), mit dem ein Teil (20, 21) der Kühlrohre (19, 20, 21) kommuniziert, und außerdem intern einen mit einer externen Kühlmediumrücklaufleitung verbundenen Rücklaufkanal (38) aufweist, mit dem das oder die übrigen Kühlrohr(e) (19) kommunizieren.

4. Brennkraftmaschine nach Anspruch 3, **dadurch gekennzeichnet, dass** der nach Art einer Kartusche ausgebildete Kühleinsatz (15) drei parallel in einer Ebene nebeneinander angeordnete gleich lange und gleich ausgebildete Kühlrohre (19, 20, 21) aufweist, wovon zwei (20, 21) parallel in der einen Richtung mit Kühlmedium durchströmt werden und das dritte (19) Kühlrohr in der anderen Richtung von Kühlmedium durchströmt wird und so die kühleinsatzinterne Kühlmedium-Rückleitung bildet.

## Claims

1. Internal combustion engine having a 2-stage exhaust-gas turbocharger (ATL) with a low-pressure stage (7) and a high-pressure stage (4) and with a charge-air cooler (14) in the connecting line (13) between the compressor (8) of the low-pressure stage (7) and the compressor (5) of the high-pressure stage (4), wherein
- the charge-air cooler (14) is formed by a cooling insert (15) through which a cooling medium can flow and which is installed in a specially designed portion (16) of the connecting line (13), through which charge air flows, between the compressors (8, 5) of the low-pressure and high-pressure stages (7, 4),
- the wall (17) of said specially designed portion (16) of the connecting line (13) forms the outer wall of the charge-air cooler (14) and delimits an air throughput volume which is adequate for adequate cooling of the charge air flowing around the installed cooling insert,
- said specially designed portion (16) of the connecting line (13) is furthermore of substantially straight design in the region of the charge-air cooler (14), is also open at at least one and, and furthermore has two manifolds (30, 31), which project laterally at in each case one end region before each axial end, for the supply and discharge of charge air, and
- said cooling insert (15) is formed in the manner of a cartridge and is composed of a base plate and a plurality of cooling tubes (19, 20, 21) provided on the outside with a multiplicity of cooling fins, which cooling tubes are fitted into bores (23) of the base plate (18) and communicate with a coolant distributor line (27) formed in the base plate, **characterized in that**
the wall (17) of the connecting line (13), in the portion (16) around the cooling insert (15), surrounds the cooling insert (15) with a spacing smaller than the diameter of the cooling tubes (19, 20, 21), and the cooling tubes, in the region of the cooling fins, are arranged parallel to the charge-air flow direction.

2. Internal combustion engine according to Claim 1, **characterized in that** each cooling tube (19, 20, 21) within the cooling insert (15) formed in the manner of a cartridge has, at one end, a circular cylindrical collar (22) by means of which said cooling tube is installed - pressed or welded or soldered - into a bore of said base plate so as to stand perpendicular to the base plate (18), and **in that** each cooling tube (19, 20, 21), at the opposite end thereof, bears a sealing sleeve (25) on a circular cylindrical collar (24).

3. Internal combustion engine according to Claims 1 and 2, **characterized in that** the cooling insert (15) which is formed in the manner of a cartridge can be completely preassembled and, during its final installation, can be inserted through one open end (28) into the interior space of the connecting line (13, 16) provided for said cooling insert, and in the process said cooling insert protrudes with the sealing sleeves (25) on the cooling tubes (19, 20, 21) into retaining bores (32) formed in the opposite axial end (29) of the straight portion (16) on the connecting line (13, 16), and said cooling insert can be fastened by means of the base plate (18) thereof to said one axial end in a leakage-free and flange-mounted manner, wherein the straight portion (16) of the connecting line (13) is closed off, at its end (29) adjacent to the sealing sleeves (25), by a cover (34) fastened there, which cover has within it a distributor line (36) which is supplied with cooling medium from the outside and with which a portion (20, 21) of the cooling tubes (19, 20, 21) communicates, and which cover furthermore has within it a return line (38) which is connected to an external cooling medium return line and with which the one or more other cooling tube(s) (19) communicate(s).

4. Internal combustion engine according to Claim 3, **characterized in that** the cooling insert (15) which is formed in the manner of a cartridge has three cooling tubes (19, 20, 21) which are of equal length and identical design and which are arranged parallel and adjacent to one another in a plane, of which cooling tubes two (20, 21) are passed through in parallel by a flow of cooling medium in one direction and the third (19) cooling tube is passed through by a flow of cooling medium in the other direction and thus forms the cooling medium return line within the cooling insert.

## Revendications

1. Moteur à combustion interne avec un turbocompresseur à gaz d'échappement à deux étages (ATL) comprenant un étage basse pression (7) et un étage haute pression (4), et un refroidisseur d'air de suralimentation (14) dans la conduite de liaison (13) entre le compresseur (8) de l'étage basse pression (7) et le compresseur (5) de l'étage haute pression (4),
- le refroidisseur d'air de suralimentation (14) étant formé par un insert de refroidissement (15) pouvant être parcouru par un fluide de refroidissement, qui est incorporé dans une portion de forme spéciale (16) de la conduite de liaison (13) parcourue par l'air de suralimentation entre les compresseurs (8, 5) de l'étage basse pression et de l'étage haute pression (7, 4),
- ladite portion de forme spéciale (16) de la conduite de liaison (13) formant avec sa paroi (17) la paroi extérieure du refroidisseur d'air de suralimentation (14) et délimitant un volume de débit d'air suffisant pour un refroidissement suffisant de l'air de suralimentation circulant autour de l'insert de refroidissement incorporé,
- ladite portion de forme spéciale (16) de la conduite de liaison (13) étant en outre réalisée dans la région du refroidisseur d'air de suralimentation (14) sous forme essentiellement droite, et étant en outre ouverte au niveau d'au moins une extrémité, et présentant de plus deux raccords coudés (30, 31) pour une conduite d'apport et une conduite d'évacuation d'air de suralimentation, partant chacun latéralement au niveau d'une région d'extrémité avant chaque extrémité axiale, et
- ledit insert de refroidissement (15) étant réalisé sous forme de cartouche et se composant d'une plaque de base ainsi que de plusieurs tubes de refroidissement (19, 20, 21) pourvus à l'extérieur d'une pluralité d'ailettes de refroidissement, lesquels tubes de refroidissement sont ajustés dans des alésages (23) de la plaque de base (18) et communiquent avec un conduite de distribution de fluide de refroidissement (27) réalisé dans la plaque de base,
**caractérisé en ce que**
le conduite de liaison (13), dans la portion (16) autour de l'insert de refroidissement (15), entoure avec sa paroi (17) l'insert de refroidissement (15) avec un espacement qui est plus petit que le diamètre des tubes de refroidissement (19, 20, 21), et les tubes de refroidissement sont disposés dans la région des ailettes de refroidissement parallèlement à la direction d'écoulement de l'air de suralimentation.

2. Moteur à combustion interne selon la revendication 1, **caractérisé en ce que** chaque tube de refroidissement (19, 20. 21) présente, à l'intérieur de l'insert de refroidissement (15) réalisé sous forme de cartouche, au niveau de l'une de ses extrémités, un épaulement cylindrique circulaire (22), avec lequel il est pressé, ou soudé, ou brasé, perpendiculairement à la plaque de base (18) dans un alésage de celle-ci, et **en ce que** chaque tube de refroidissement (19, 20, 21) porte, à son extrémité opposée, sur un épaulement cylindrique circulaire (24), une douille d'étanchéité (25).

3. Moteur à combustion interne selon les revendications 1 et 2, **caractérisé en ce que** l'insert de refroidissement (15) réalisé sous forme de cartouche peut être complètement prémonté, et lors de son montage final peut être inséré à travers l'extrémité ouverte (28) dans l'espace interne de la conduite de liaison (13, 16) préparée à cet effet, et plonge ainsi avec les douilles d'étanchéité (25) sur les tubes de refroidissement (19, 20, 21) dans des alésages de retenue (32) réalisés à l'extrémité axiale opposée (29) de la portion droite (16) au niveau de la conduite de liaison (13, 16), et peut être fixé avec sa plaque de base (18) par bridage sans fuite à une extrémité axiale, la portion droite (16) de la conduite de liaison (13) étant fermée à son extrémité (29) adjacente aux douilles d'étanchéité (25) par un couvercle (34) qui y est fixé, lequel couvercle présente à l'intérieur un conduite de distribution (36) alimenté depuis l'extérieur en fluide de refroidissement, avec lequel communique une partie (20, 21) des tubes de refroidissement (19, 20, 21), et présente en outre à l'intérieur un conduite de retour (38) connecté à une conduite externe de retour de fluide de refroidissement, avec lequel conduite de retour communiquent le ou les autres tubes de refroidissement (19).

4. Moteur à combustion interne selon la revendication 3, **caractérisé en ce que** l'insert de refroidissement (15) réalisé sous forme de cartouche présente trois tubes de refroidissement (19, 20, 21) disposés parallèlement dans un plan les uns à côté des autres, réalisés de même longueur et sous forme identique, dont deux (20, 21) sont parcourus parallèlement dans une direction avec du fluide de refroidissement et le troisième (19) tube de refroidissement est parcouru par du fluide de refroidissement dans l'autre direction, et forme ainsi la conduite de retour de fluide de refroidissement à l'intérieur de l'insert de refroidissement.
